# EUROPEAN PATENT SPECIFICATION

(11) **EP 3 525 577 B1**
(45) Date of publication and mention of the grant of the patent: **24.11.2021**
(21) Application number: 17794438.6
(22) Date of filing: 12.10.2017
(51) Int. Cl.: A01G 33/00

(54) **SEEDING DEVICE FOR SEAWEED**
SÄVORRICHTUNG FÜR SEETANG
DISPOSITIF D'ENSEMENCEMENT DESTINÉ À DES ALGUES

(30) Priority: 12.10.2016 NL 2017612
(43) Date of publication of application: 21.08.2019
(73) Proprietor: IHC Holland IE B.V., 3361 EP Sliedrecht (NL)
(72) Inventor: KERKVLIET, Cornelis Joannes, 2408 PK Alphen aan den Rijn (NL); GONÇALVES CASTRO, Maria Bernadete, 3315 DP Dordrecht (NL)
(74) Representative: Nederlandsch Octrooibureau
(86) International application number: PCT/NL2017/050668
(87) International publication number: WO 2018/070871

(56) References cited:
- JP-A- 2011 103 853
- KR-A- 20110 092 851
- KR-A- 20130 053 643
- KR-B1- 100 916 862
- KR-B1- 101 295 409

## Description

### Field of the invention

The present invention relates to a seaweed seeding device, and methods for seeding seaweed.

### Background art

When cultivating seaweed, seaweed ropes or seeds are typically connected to or wrapped around a main substrate rope which is used to retain seaweed in a fixed place for growth until ready for harvest. This is commonly called "twine seeding." Often, a further rope or wire is wrapped around the seaweed line and the main rope to hold them together. A number of different devices are available for fixing the seaweed rope or seeds to the main substrate rope. KR101237156 discloses a method and device for twine seeding a rope with a seedling line, which involves using a fix rope to wrap around the main substrate rope and seedling line. The system uses a number of pulleys and rollers driven by a motor for movement through the system and for adhering the fix rope around the rope and seedling line. Another similar system is shown in KR20130053643, which winds a binding rope around a seedling line and a rope for binding them together. The rope and seedling line are fed through a main pipe, and a pulley driven by a motor rotates around the rope and seedling line as they exit the pipe to bind them together. Each of these require motors to drive the various parts of the devices for proper binding using a fix or binding rope around the main rope and seaweed line. Because motors are required, the devices are more prone to mechanical failures and cannot survive harsh or underwater conditions as well.

Twine seeding is a costly and time-consuming process, which typically involves a hatchery phase, where seedlings are attached to the seaweed line. This usually takes about six weeks and requires a heavily controlled environment.

### Summary

According to a first aspect of the invention, a seaweed seeding device for wrapping seaweed rope around a main rope comprises a frame; a friction wheel rotatably connected to the frame to receive the main rope around the wheel and rotate as the main rope is pulled through the device; a bobbin carrier rotatably connected to the frame around an axis of rotation; a seaweed exit guide connected to the bobbin carrier offset from the axis of rotation; and a transmission connecting the friction wheel to the bobbin carrier to translate rotational movement of the friction wheel to rotate the bobbin carrier.

This provides for a seaweed seeding device which does not require electric driving means, and thereby can perform at the highest efficiency even in harsh environments and/or underwater conditions. Using a transmission to connect and translate rotational movement through the device can also provide a cheaper and more reliable system, as there are fewer vulnerable parts needing checking and maintenance throughout the working life. The use of a frame allows the device to easily be placed on or connected to other devices or vehicles for easy transport before and/or during a seeding operation.

According to an embodiment, the device further comprises a bobbin connected to the bobbin carrier. Connecting a bobbin to the bobbin carrier can allow for easy connecting of seaweed to the device for wrapping as the main rope exits the device. Bobbins with seaweed can be grown elsewhere and then connected to the bobbin carrier ready for wrapping. Multiple bobbins may be used to wrap long pieces of seaweed.

According to an embodiment, the transmission comprises a gear train. Optionally, the transmission comprises a plurality of sets of gears to increase the rotational speed from the friction wheel to the bobbin carrier. The ratio of seaweed to main rope or density of seaweed line around the main rope can be adjusted using a transmission with a plurality of gears. Gears tend to have the lowest friction of transmission varieties, and thus would provide a reliable low-friction form of translating rotary motion from the friction wheel to the bobbin carrier.

According to an embodiment, the bobbin carrier comprises a front face, and the seaweed exit guide extends from the front face of the bobbin carrier. Such a design can provide a stable and effective way to wrap a seaweed line around the main rope.

According to an embodiment, the device further comprises a guiding wheel to guide the main rope between the friction wheel and the bobbin carrier. This can help to ensure an optimal angle between the angle of attack of the main rope and the direction of seeding, for example ninety degrees. A guiding wheel can be a low-friction way of providing this guide.

According to an embodiment, the frame comprises a plurality of slots to accommodate different feeding heights of the main rope into the frame. Multiple slots can also accommodate different friction wheel diameters. Different diameters can be used to vary the seaweed rope to main rope ratio.

According to an embodiment, the bobbin carrier further comprises one or more counterweights. The one or more counterweights can help to balance out the bobbin carrier, countering the weight of the seaweed exit guide and/or the bobbins, thereby decreasing the force required for rotating the bobbin carrier.

According to an embodiment, the device is formed of anti-corrosion material. The material can be a polymer, for example, Nylon or metals such as Aluminum and/or alloys. This can help to ensure longevity of the device even in corrosive environments, such as at sea and/or underwater. These materials can also provide for relatively easy production and/or construction.

According to an embodiment, the friction wheel comprises a high friction surface coating. The high friction surface coating can include, for example, a resin and at least an aggregate. A high friction coating can allow for fewer wrappings around the friction wheel, for example, three instead of four.

According to an embodiment, the friction wheel comprises one or more rope guides. Such rope guides can help aid the rope over the friction wheel and/or lift the rope from the friction wheel such that it can move sideways along the friction wheel.

According to an embodiment, the bobbin comprises a seaweed rope exit guide extending in a direction parallel with the axis of rotation. This can help to properly guide the seaweed line around the main rope as it exits the device and help to form the optimal angle between the seaweed line and the main rope.

According to an embodiment, the bobbin carrier comprises a hollow shaft through the axis of rotation to receive the main rope after winding around the friction wheel, with the hollow shaft acting as an exit for the main rope from the device. The hollow shaft can provide for an exit of main rope at an effective position for wrapping seaweed around.

According to an embodiment, a vessel or underwater vehicle comprises the device of any of the preceding claims. The frame of the device can allow for easy connection to or on a vehicle or vessel. Vehicles or vessels can provide for an easy way to move the device for stringing the rope and seaweed line for cultivation.

According to a further aspect of the invention, a method of wrapping seaweed around a main rope comprises feeding a main rope into a seaweed wrapping device around a friction wheel a plurality of times and out a hollow shaft of a bobbin carrier; connecting a seaweed rope from a bobbin on the bobbin carrier to the main rope exiting the hollow shaft; and pulling the main rope through the device. The bobbin carrier connects to the friction wheel such that rotation of the friction wheel rotates the bobbin carrier causing the seaweed rope exiting the bobbin to wrap around the main rope. Such a method provides for a simple way of effectively and controllably wrapping a seaweed line around a main rope for cultivation. The use of a friction wheel connected to a bobbin carrier allows for the wrapping of the seaweed line around the main rope without electrical driving means, allowing for an effective device that does not need a lot of maintenance and can withstand harsh conditions.

According to a further aspect of the invention, a machine to seed seaweed lines is disclosed. The machine can perform a method of direct seeding. The machine can include a drum, rope guiding and/or pressing devices to achieve a high and constant seeding

### Short description of drawings

The present invention will be discussed in more detail below, with reference to the attached drawings, in which
Fig. 1A shows a perspective view a seaweed seeding device;
Fig. 1B shows a side view of the seaweed seeding device of Fig. 1A;
Fig. 1C shows a front view of the seaweed seeding device of Fig. 1A;
Fig. ID shows a cross-sectional view from the top of the seaweed seeding device along line D-D;
Fig. 2A shows a perspective view of a second embodiment of a seaweed seeding device for direct seeding; and
Fig. 2B shows a top view of the seaweed seeding device of Fig. 2A.

### Description of embodiments

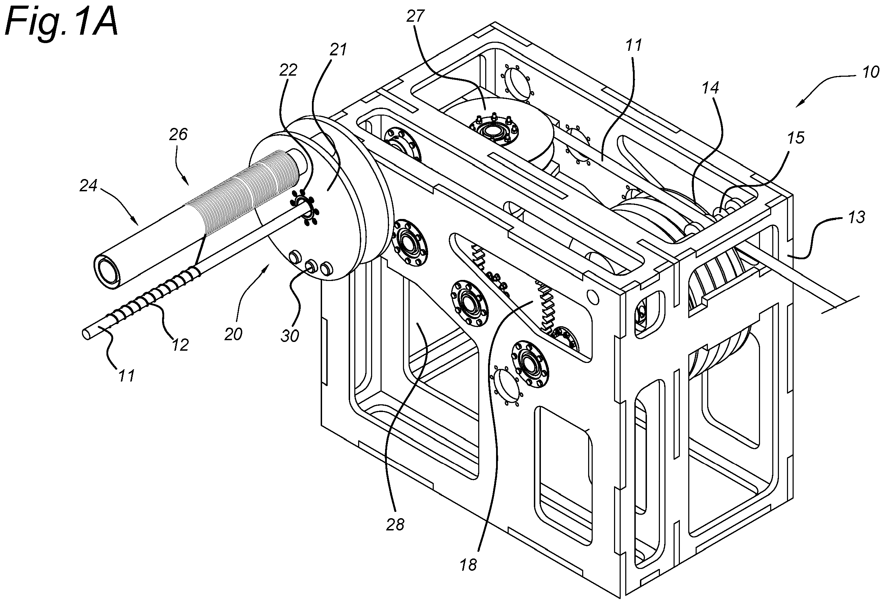

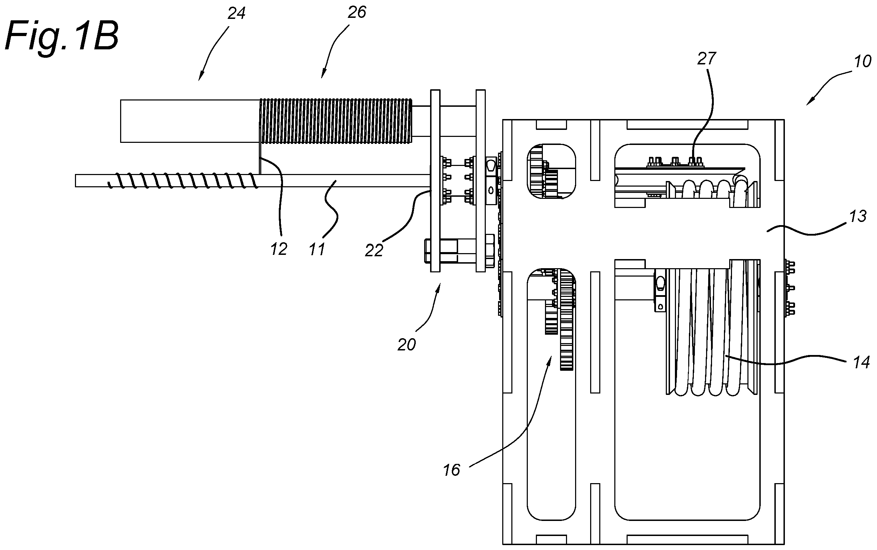

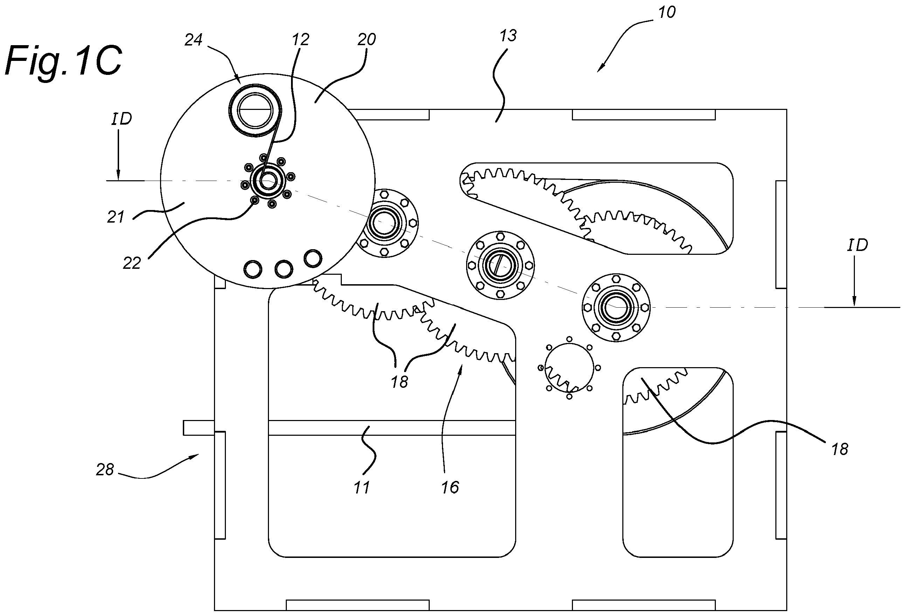

Fig. 1A shows a perspective view seaweed seeding device 10 with main rope 11 and seaweed line 12, Fig. 1B shows a side view of the seaweed seeding device 10; Fig. 1C shows a front view of the seaweed seeding device 10; and Fig. ID shows a cross-sectional view from the top of the seaweed seeding device 10 along line D-D.

Seaweed seeding device 10 includes frame 13, friction wheel 14 (with rope guides 15), transmission 16 with gears 18, bobbin carrier 20 with face 21 and hollow shaft 22, seaweed exit guide 24, bobbin 26, guide wheel 27, rope inlet slots 28 and counterweights 30.

Frame 13 supports the various parts of seaweed seeding device 10, and can be a substantially open frame or could include side walls. Frame 13 includes one or more slots or openings 28 to feed main rope 11 into device to friction wheel 14. The slots or openings 28 can be located at different heights to accommodate different drum and/or winch sizes and placements. Frame 13 and other components can be made of various materials, including but not limited to, polymers, for example, Nylon; wood and/or metals such as Aluminium (including alloys). A material with anti-corrosion properties can be used to provide an increased lifespan, particularly when the device is used in corrosive environments such as under-water.

Friction wheel 14 connects to frame 13 and can rotate with respect to frame13. Friction wheel 14 can be various sizes but is wide enough for main rope 11 to wrap around friction wheel 14 a number of times. The number of times can vary, but can be, for example, 2-10 times to ensure that sufficient friction is generated to rotate wheel 14 as rope 11 moves through device 10. Friction wheel 14 can be coated, for example, with a high friction surface coating, for example, comprising a resin and an aggregate. Such a coating would allow for fewer wraps of rope around friction wheel 14 without decreasing effectiveness.

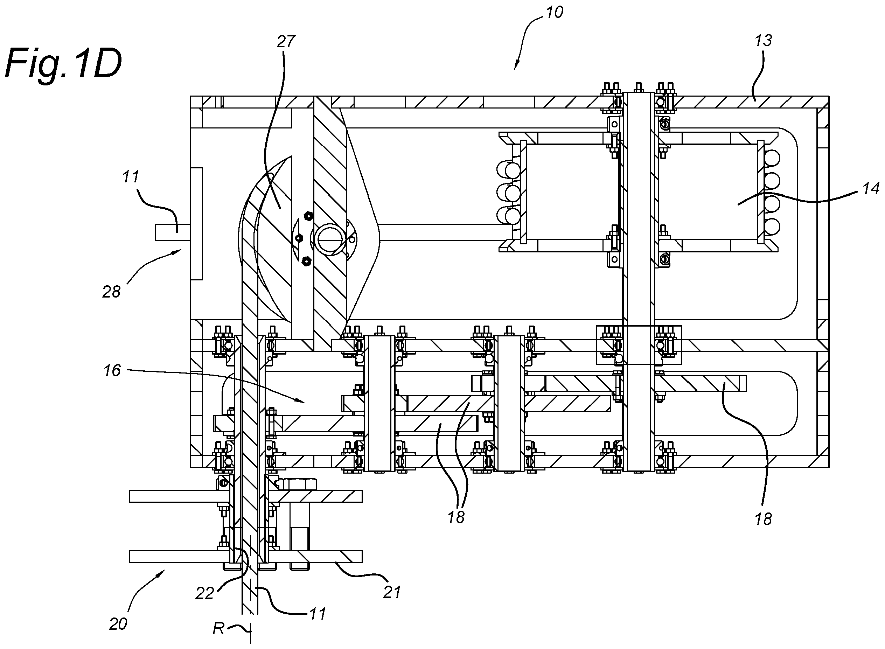

Transmission 16 comprises a plurality of gear sets 18 which are connected to frame 13, and also connect friction wheel 14 to bobbin carrier 20. The connection to friction wheel 14 is through a common shaft between friction wheel 14 and a gear 18, as can be seen in Fig. 1D. In the embodiment shown in Figs. 1A-1D, transmission 16 includes three gear sets 18 forming a gear train. This increases the initial rotational speed of friction wheel 14 twenty-eight times. Other embodiments can use more or fewer gear sets, or other modes of transmission, for example belts or chains. By using a gear train, transmission 16 is able to translate and increase the rotary motion of the friction wheel 14 to bobbin carrier 20. This increase can vary depending on the desired wrapping of rope 11 with seaweed line 12.

Bobbin carrier 20 connects to frame 13 and rotates around axis of rotation R. In device 10, bobbin carrier 20 is on an outside of frame 13 in device 10, though in some embodiments could be within frame 13. Bobbin carrier 20 includes hollow shaft 22 which aligns with axis of rotation R. Bobbin carrier 20 also includes a seaweed exit guide 24 which connects to bobbin carrier 20 at a position offset from axis of rotation R. This allows seaweed exit guide 24 to rotate around axis of rotation R when bobbin carrier 20 is rotating. Bobbin 26 holding seaweed line 11 can also be located on bobbin carrier 20, as shown in device 10 or bobbin 26 could be located at a different position, and simply feed seaweed line 12 to seaweed exit guide 24 for wrapping. Counterweights 30 are also located on bobbin carrier 20 to counterbalance the weight of seaweed exit guide 24 and/or bobbin 26 on bobbin carrier 20.

One or more guides 15 can be used for aiding main rope 11 over friction wheel 14. Additionally, one or more guide wheels 27 can be used to help guide and maintain tension in main rope 11 when moving through device 10 from friction wheel 14 to exiting device 10. Guide wheel 27 can be used to ensure an optimal angle for the seeding line around main rope 11, for example, ninety degrees between the seeding line angle of attach and the direction of the seeding. Different rope diameters can be accommodated and seeded by simply changing the drum size and/or position.

To prepare for use of device 10, main rope 11 is fed into device 10 through opening 28, and can be guided by guide 15 to wrap around friction wheel 14 a plurality of times. Next main rope 11 extends around guide wheel 27 and out the centre of hollow shaft 22 in bobbin carrier 20. Seaweed line 12 is wrapped around bobbin 26, and an end extends from seaweed exit guide 24. The end of seaweed line 12 can be attached to main rope 11, for example through a simple knot.

Main rope 11 and seaweed line 12 are now ready for use in setting up seaweed lines for cultivation. Main rope 11 (with seaweed line 12 connected) can be pulled from the main rope exit of device 10 at hollow shaft 22 to a location where it will be connected for cultivating the seaweed. As main rope 11 is pulled, it moves through device 10. The movement of main rope 11 around friction wheel 14 rotates friction wheel 14, which translates to rotation of bobbin carrier 20 through transmission 16. Due to gears 18, rotational motion is also increase from friction wheel 14 to bobbin carrier 20. As seaweed line 12 is connected to main rope 11, it also moves with the movement of main rope 11, only is wrapped around main rope 11 (in spiral) due to the rotational motion of bobbin carrier 20 around main rope 11 exiting through hollow shaft 22. The increased rotary motion of bobbin carrier 20 as compared to friction wheel 14 results in more dense wrapping of seaweed rope 12 around main rope 11.

The movement of main rope 11 through and from device could also be caused by moving device 10 after having connected main rope 11 to a set point for cultivation (instead of moving rope 12 as described above). In such an embodiment, device 10 could be located on a vessel, an underwater vehicle, or any other apparatus which allows for movement of device 10 to desired locations.

The use of device 10 with friction wheel 14 connected to bobbin carrier 20 through a transmission allows for a simple and effective way of wrapping a seaweed line 12 around a main rope 11 for cultivation. By using a friction wheel 14 and translating the rotary motion of the friction wheel 14 to bobbin carrier 20, device 10 can effectively wrap a seaweed line 12 around a main rope 11 without the use of an electric driving system, such as a motor. This allows the device 10 to effectively work, even in harsh environments such as underwater. The lack of requirement for an electric driving means makes the device easier and less costly to maintain as well, resulting in an overall longer workable life. The size and design with frame 13 make device 10 easily transportable, allowing for use on or with a number of different vessels or vehicles. Additionally, the simple design allows for components which could be easily disassembled and reassembled, making for easy transportation and/or shipping before and/or between uses. The use of a transmission 16 which is flexible to change the rotary motion as desired by using more or fewer gear sets 18 provides a great deal of control of the wrapping to obtain the desired wrapping density at the output. The use of counterweights 30 on bobbin carrier 20 also helps to balance seaweed exit guide 24 and/or bobbin 26 on bobbin carrier 20, thereby decreasing the force needed for rotating bobbin carrier 20.

The ability to use device 10 in submerged environments can result in the ability to use device 10 and string lines even in harsh conditions. In harsh weather conditions, such as during strong wind, current and/or waves, device 10 could be submerged mitigating the impact of the conditions, and rope 11 with seaweed line 12 could still be strung.

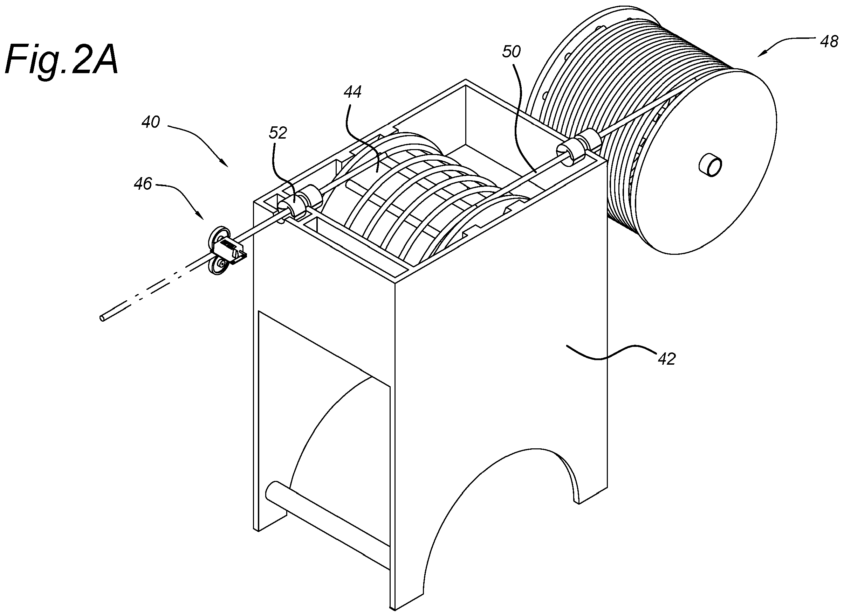

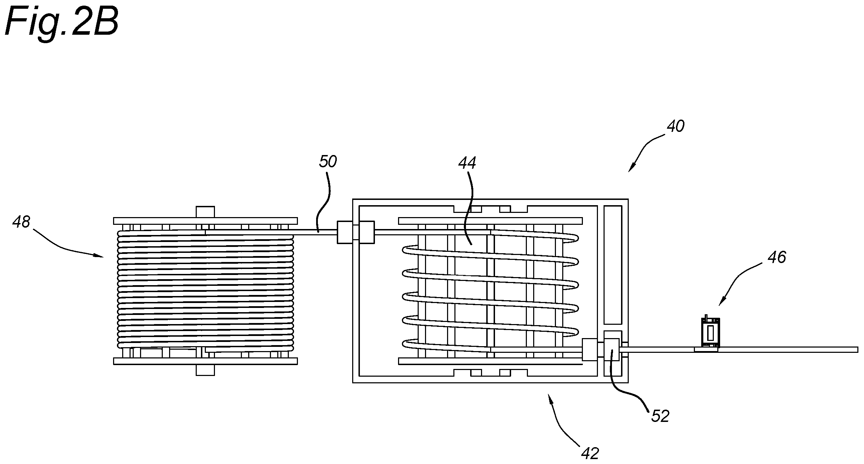

Fig. 2A shows a perspective view of a second embodiment of a seaweed seeding device 40 for direct seeding; and Fig. 2B shows a top view of the seaweed seeding device 40. Seaweed seeding device 40 includes bath frame 42, drum 44 and press rollers 46. Also shown is drum 48 holding main rope 50.

Bath frame 42 holds a bath of glue, binding agent and/or adhesive and seaweed seeds. Drum 44 is disposed therein. Rope 50 is wound around drum 44, one or more times, where it will be exposed to the seeds and glue. The seaweed seeds and glue will adhere to rope 50 as it leaves drum, and rope 50 then goes through press rollers 46 to help ensure seaweed seeds stay adhered to rope 50. Any excess seaweed seeds and glue can be returned to device 40 through a collection and transport system or any other means. Rollers 46 can be two wheels pressing together or other roller means. Device 40 provides a simple way of connecting seaweed seeds to a rope 50 for cultivation of seaweed using the direct seeding method.

As can be best seen in Fig. 2A, a guiding element 52 is provided to guide the rope when it exits the bath frame 42 of seaweed seeding device 40. Guiding element 42 is releasably connected to bath frame 42 by any suitable means, for example, a snap fit joint. A similar guiding element can be provided to guide the entrance of rope 50 into bath frame 42 and/or around drum 44. It should be noted that the guiding element 52 can also act as act as a funnel to guide the excess of seeds and/or glue to return to the bath frame 42. In this manner, the quality of the seeding process can be optimal and constant. The control of retention time of a rope section in bath 42 and around drum 44, and of force of the pressing rolls help to ensure the final quality of the seeding process.

Drum 44 comprises a plurality of slats extending in a substantially radial direction and provided with a contact surface on the side towards the direction of rotation. The slats are provided with a slope of about 10-20% with respect to the radial direction. In this manner, the rope 50 will homogenously absorb the right amount of the mix of glue, binding agent and/or adhesive and seaweed seeds, while the number of windings is minimized. Moreover, by having this configuration, the seeding speed can be at least 1 km of rope per hour, while the space needed for this operation is minimized. This results in a compact and reliable seaweed seeding device 40.

The skilled person will appreciate that said glue, binding agent or adhesive is a substance which attaches two or more elements to each other at the level of the respectively contacting surfaces. This offers the advantage that said glue, binding agent or adhesive promotes the adhesion of algae or seaweed to the rope 50. Said glue or adhesive can be applied separately, in advance onto said rope 50 or can be added to the bath of glue, binding agent and/or adhesive, which will also be comprising seedlings of algae or seaweed into the seaweed seeding device 40. A suitable glue, binding agent or adhesive may comprise a polymer, for example, methyl cellulose. Optionally, said glue, binding agent or adhesive is a bio-adhesive. This bio-adhesive material will be diluted once the algae or seaweed is directly connected to the rope directly. This can happen once this algae or seaweed grows holdfasts that are directly connected to the yarns of the rope 50.

It should be noted that direct seeding comprises seaweed seedlings that are mixed into a glue suspension, and can be directly applied to the substrate line, eliminating the hatchery phase. This line can be immediately deployed in the field to allow seaweed to further grow until harvesting. If the glue is bio-degradable it will eventually disappear, and at the moment that the seedlings are firmly fixed to the substrate rope. The skilled person will appreciate that ribbon substrates can also be seeded with the direct seeding process, by adjusting the seeding parameters.

The skilled person will also appreciate that the seaweed seeding device can be used onshore and offshore. When it is used offshore, the invention can be used in a vehicle or vessel. Said vehicle or vessel can include a seaweed harvesting system, directly connected to a seaweed cultivation system and a coupling device for coupling substrate of seaweed, wherein the seaweed seeding device of this invention is also provided. Moreover, when the seaweed seeding device is used onshore, it can be stand alone or being carried on a vehicle, vessel or the seaweed cultivation system and any of these can be located at a position up to 0-100 meters from the sea line.

While the invention has been described to not require driving means, in some embodiments, electric driving means could be present. More or fewer gear sets 18 and/or different transmission 16 means could be used depending on system requirements. Additionally, the shape, configuration and location of bobbin 26 and/or seaweed exit guide 24 can vary in different embodiments.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular or preferred embodiments disclosed, but that the invention will include all embodiments falling within the scope of the appended claims.

## Claims

1. A seaweed seeding device for wrapping seaweed rope around a main rope, the device comprising:
- a frame,
- a friction wheel rotatably connected to the frame to receive the main rope around the wheel and rotate as the main rope is pulled through the device;
- a bobbin carrier rotatably connected to the frame around an axis of rotation;
- a seaweed exit guide connected to the bobbin carrier offset from the axis of rotation; and
- a transmission connecting the friction wheel to the bobbin carrier to translate rotational movement of the friction wheel to rotate the bobbin carrier.

2. The device of claim 1, and further comprising a bobbin connected to the bobbin carrier.

3. The device of any of the preceding claims, wherein the transmission comprises a gear train.

4. The device of any of the preceding claims, wherein the bobbin carrier comprises a front face, and the seaweed exit guide extends from the front face of the bobbin carrier.

5. The device of any of the preceding claims, wherein the transmission comprises a plurality of sets of gears to increase the rotational speed from the friction wheel to the bobbin carrier.

6. The device of any of the preceding claims, and further comprising a guiding wheel to guide the main rope between the friction wheel and the bobbin carrier.

7. The device of any of the preceding claims, wherein the frame comprises a plurality of slots to accommodate different feeding heights of the main rope into the frame.

8. The device of any of the preceding claims, wherein the bobbin carrier further comprises a counterweight.

9. The device of any of the preceding claims, wherein the device is formed of Nylon.

10. The device of any of the preceding claims, wherein the friction wheel comprises a high friction surface coating.

11. The device of any of the preceding claims, wherein the friction wheel comprises one or more rope guides.

12. The device of any of the preceding claims, wherein the bobbin comprises a seaweed rope exit guide extending in a direction parallel with the axis of rotation.

13. The device of any of the preceding claims, wherein the bobbin carrier comprises a hollow shaft through the axis of rotation to receive the main rope after winding around the friction wheel, with the hollow shaft acting as an exit for the main rope from the device.

14. A vessel or underwater vehicle comprising the device of any of the preceding claims.

15. A method of wrapping seaweed around a main rope, the method comprising:
- feeding a main rope into a seaweed wrapping device around a friction wheel a plurality of times and out a hollow shaft of a bobbin carrier;
- connecting a seaweed rope from a bobbin on the bobbin carrier to the main rope exiting the hollow shaft; and
- pulling the main rope through the device, wherein the bobbin carrier connects to the friction wheel such that rotation of the friction wheel rotates the bobbin carrier causing the seaweed rope exiting the bobbin to wrap around the main rope.

## Patentansprüche

1. Seetang-Sävorrichtung zum Wickeln von Seetangstängeln um ein Hauptseil, wobei die Vorrichtung aufweist:
- einen Rahmen,
- ein Reibrad, das drehbar mit dem Rahmen verbunden ist, um das Hauptseil um das Rad herum aufzunehmen und um sich zu drehen, wenn das Hauptseil durch die Vorrichtung gezogen wird,
- einen Spulenträger, der um eine Drehachse an der Vorrichtung angebracht ist,
- eine Seetang-Ausgabeführung, die versetzt zu der Drehachse mit dem Spulenträger verbunden ist, und
- ein Getriebe, das das Reibrad mit dem Spulenträger verbindet, um die Drehbewegung von dem Reibrad zur Drehung des Spulenträgers zu übertragen.

2. Vorrichtung nach Anspruch 1, die weiter eine an dem Spulenträger angebrachte Spule aufweist.

3. Vorrichtung nach einem der vorhergehenden Ansprüche, wobei das Getriebe einen Zahnradzug aufweist.

4. Vorrichtung nach einem der vorhergehenden Ansprüche, wobei der Spulenträger eine Frontfläche aufweist und wobei die Seetang-Ausgabeführung von der Frontfläche des Spulenträgers ausgeht.

5. Vorrichtung nach einem der vorhergehenden Ansprüche, wobei das Getriebe eine Mehrzahl von Sätzen von Zahnrädern aufweist, um die Drehzahl von dem Reibrad zu dem Spulenträger zu erhöhen.

6. Vorrichtung nach einem der vorhergehenden Ansprüche, die weiter ein Führungsrad aufweist, um das Hauptseil zwischen dem Reibrad und dem Spulenträger zu führen.

7. Vorrichtung nach einem der vorhergehenden Ansprüche, wobei der Rahmen eine Mehrzahl von Schlitzen aufweist, um unterschiedliche Einführhöhen des Hauptseils in den Rahmen zu bieten.

8. Vorrichtung nach einem der vorhergehenden Ansprüche, wobei der Spulenträger weiter ein Gegengewicht aufweist.

9. Vorrichtung nach einem der vorhergehenden Ansprüche, wobei die Vorrichtung aus Nylon hergestellt.

10. Vorrichtung nach einem der vorhergehenden Ansprüche, wobei das Reibrad eine Beschichtung mit hoher Reibung aufweist.

11. Vorrichtung nach einem der vorhergehenden Ansprüche, wobei das Reibrad eine oder mehrere Seilführungen aufweist.

12. Vorrichtung nach einem der vorhergehenden Ansprüche, wobei die Spule eine Seetangstängel-Ausgabeführung aufweist, die in einer Richtung parallel zur Drehachse verläuft.

13. Vorrichtung nach einem der vorhergehenden Ansprüche, wobei der Spulenträger eine Hohlwelle durch die Achse aufweist, um das Hauptseil nach dem Wickeln um das Reibrad aufzunehmen, wobei die Hohlwelle als ein Ausgang für das Hauptseil aus der Vorrichtung fungiert.

14. Schiff oder Unterwasserfahrzeug mit der Vorrichtung nach einem der vorhergehenden Ansprüche.

15. Verfahren zum Wickeln von Seetang um ein Hauptseil, wobei bei dem Verfahren:
- ein Hauptseil in einer Seetang-Wickelvorrichtung mehrfach um ein Reibrad und aus einer Hohlwelle eines Spulenträgers heraus geführt wird,
- ein Seetangstängel von einer Spule auf dem Spulenträger mit dem aus der Hohlwelle austretenden Hauptseil verbunden wird und
- das Hauptseil durch die Vorrichtung gezogen wird, wobei der Spulenträger mit dem Reibrad verbunden ist, so dass die Drehung des Reibrades den Spulenträger dreht, was bewirkt, dass der die Spule verlassende Seetangstängel um das Hauptseil gewickelt wird.

## Revendications

1. - Dispositif d'ensemencement d'algues marines pour enrouler une corde d'algues marines autour d'une corde principale, le dispositif comprenant :
- un cadre,
- une roue de friction reliée de manière rotative au cadre pour recevoir la corde principale autour de la roue et tourner à mesure que la corde principale est tirée à travers le dispositif ;
- un porte-bobine relié de manière rotative au cadre autour d'un axe de rotation ;
- un guide de sortie d'algues marines relié au porte-bobine et décalé par rapport à l'axe de rotation ; et
- une transmission reliant la roue de friction au porte-bobine pour transmettre un mouvement de rotation de la roue de friction pour faire tourner le porte-bobine.

2. - Dispositif selon la revendication 1, et comprenant en outre une bobine reliée au porte-bobine.

3. - Dispositif selon l'une quelconque des revendications précédentes, dans lequel la transmission comprend un train d'engrenages.

4. - Dispositif selon l'une quelconque des revendications précédentes, dans lequel le porte-bobine comprend une face avant, et le guide de sortie d'algues marines s'étend à partir de la face avant du porte-bobine.

5. - Dispositif selon l'une quelconque des revendications précédentes, dans lequel la transmission comprend une pluralité de trains d'engrenages pour augmenter la vitesse de rotation de la roue de friction au porte-bobine.

6. - Dispositif selon l'une quelconque des revendications précédentes, et comprenant en outre une roue de guidage pour guider la corde principale entre la roue de friction et le porte-bobine.

7. - Dispositif selon l'une quelconque des revendications précédentes, dans lequel le cadre comprend une pluralité de fentes pour s'adapter à différentes hauteurs d'introduction de la corde principale dans le cadre.

8. - Dispositif selon l'une quelconque des revendications précédentes, dans lequel le porte-bobine comprend en outre un contrepoids.

9. - Dispositif selon l'une quelconque des revendications précédentes, dans lequel le dispositif est formé de nylon.

10. - Dispositif selon l'une quelconque des revendications précédentes, dans lequel la roue de friction comprend un revêtement de surface à friction élevée.

11. - Dispositif selon l'une quelconque des revendications précédentes, dans lequel la roue de friction comprend un ou plusieurs guides de corde.

12. - Dispositif selon l'une quelconque des revendications précédentes, dans lequel la bobine comprend un guide de sortie de corde d'algues marines s'étendant dans une direction parallèle à l'axe de rotation.

13. - Dispositif selon l'une quelconque des revendications précédentes, dans lequel le porte-bobine comprend un arbre creux à travers l'axe de rotation pour recevoir la corde principale après enroulement autour de la roue de friction, l'arbre creux servant, pour la corde principale, de sortie du dispositif.

14. - Navire ou véhicule sous-marin comprenant le dispositif selon l'une quelconque des revendications précédentes.

15. - Procédé d'enroulement d'algues marines autour d'une corde principale, le procédé comprenant :
- introduire une corde principale dans un dispositif d'enroulement d'algues marines, autour d'une roue de friction une pluralité de fois et hors d'un arbre creux d'un porte-bobine ;
- relier une corde d'algues marines provenant d'une bobine sur le porte-bobine à la corde principale sortant de l'arbre creux ; et
- tirer la corde principale à travers le dispositif, le porte-bobine étant relié à la roue de friction de telle sorte qu'une rotation de la roue de friction fait tourner le porte-bobine, amenant la corde d'algues marines sortant de la bobine à s'enrouler autour de la corde principale.
